# FASCICULE DE BREVET EUROPEEN

(11) **EP 0 638 821 B1**
(45) Date de publication et mention de la délivrance du brevet: **23.09.1998**
(21) Numéro de dépôt: 94401763.1
(22) Date de dépôt: 01.08.1994
(51) Int. Cl.: G01S 13/89, G01S 7/02

(54) **Système d'imagerie radar hyperfréquence à double zone de couverture, destinée à être embarquée sur satellite**
In einem Satelliten untergebrachtes Mikrowellen-Abbildungsradarsystem mit doppeltem Erfassungsbereich
Microwave imaging radar system with double coverage area, to be installed on board a satellite

(30) Priorité: 04.08.1993 FR 9309616
(43) Date de publication de la demande: 15.02.1995
(73) Titulaire: ALCATEL ESPACE, F-92737 Nanterre Cédex (FR)
(72) Inventeur: Lenormand, Régis, F-31700 Blagnac (FR)
(74) Mandataire: Fournier, Michel

(56) Documents cités:
- EP-A- 0 548 876
- US-A- 5 072 226
- ONDE ELECTRIQUE, vol.72, no.6, Novembre 1992, PARIS FR pages 29 - 38, XP322071 RICHARD ET AL. 'Observation de la terre depuis l'espace à l'aide d'instruments hyperfréquences actifs'

## Description

La présente invention se rapporte à une installation d'imagerie radar hyperfréquence embarquée sur satellite défilant en orbite basse et à double zone de couverture.

Un satellite d'observation de la surface de la terre ne peut effectuer que des visées latérales. Une visée latérale définit, lors du défilement du satellite, une bande de couverture au sol appelée "fauchée".

Une seule visée latérale, et donc une seule fauchée, est considérée actuellement comme insuffisante, et il est demandé d'effectuer simultanément deux visées latérales, une de chaque côté du satellite, définissant ainsi deux tracés au sol, ou fauchées, parallèles.

La solution actuellement adoptée pour réaliser une telle mission d'imagerie radar hyperfréquence à double-fauchée consiste à prévoir sur le satellite deux antennes d'émission/réception distinctes, rayonnant respectivement de part et d'autre du satellite, ces deux antennes distinctes étant respectivement associées à deux blocs électroniques corrélatifs de formation de faisceaux, également distincts.

On double ainsi toute l'électronique de puissance qui fait partie de la charge utile embarquée sur le satellite, ce qui est très pénalisant en termes de prix de revient, de masse embarquée sur le satellite, ainsi qu'en terme de consommation d'énergie électrique.

L'invention vise à remédier à cet inconvénient. Elle se rapporte à cet effet à un système d'imagerie radar hyperfréquence embarquée sur satellite et à double zone de couverture, comprenant deux réflecteurs principaux cylindro-paraboliques illuminés respectivement par deux réseaux primaires de sources aptes à émettre ou à recevoir des ondes hyperfréquence, les réseaux primaires étant disposés sensiblement dans le plan focal respectif des réflecteurs principaux, caractérisé en ce que lesdits réseaux primaires sont alimentés à partir d'une chaîne d'amplification unique.

Selon une caractéristique préférentielle, les réseaux primaires sont alimentés en alternance à partir d'une chaîne d'amplification unique. Selon une réalisation particulière, le système de l'invention comprend en outre au moins un réseau collecteur, et les réseaux primaires sont alimentés à partir de ce(s) réseau(x) collecteur via des voies d'une connectique homothétique qui conserve les relations géométriques entre les signaux reçus par les sources d'un réseau collecteur et les signaux transmis vers les sources d'un réseau primaire correspondant.

Deux variantes de réalisation seront décrites explicitement, l'une comprenant en outre un réseau actif et un réflecteur auxiliaire, et un seul réseau collecteur disposé dans le plan focal dudit réflecteur auxiliaire qui est illuminé par ledit réseau actif ; et l'autre comprenant en outre deux réseaux actifs, deux réflecteurs auxiliaires, et deux réseaux collecteurs disposés chacun dans le plan focal respectif de l'un desdits réflecteurs auxiliaires qui est illuminé respectivement par l'un desdits réseaux actifs.

Selon une caractéristique préférentielle, les réseaux primaires sont excités par des polarisations orthogonales entre elles. Plusieurs variantes du système selon l'invention comprennent cette caractéristique. Selon une première réalisation, le réseau primaire du premier réflecteur principal est composé de sources aptes à émettre ou à recevoir des ondes hyperfréquence d'une première polarisation, et le réseau primaire du second réflecteur principal est composé de sources aptes à émettre ou à recevoir des ondes hyperfréquence d'une seconde polarisation, lesdites première et seconde polarisations étant orthogonales entre elles.

Selon une réalisation particulière, chaque source du réseau primaire relatif au premier réflecteur principal est connecté à un premier accès d'une source géographiquement correspondante dudit réseau collecteur, ce réseau collecteur étant composé de sources à bi-polarisation, et ce premier accès étant relatif à ladite première polarisation ; et, de la même façon, chaque source du réseau primaire relatif au deuxième réflecteur principal et correspondante géographiquement à chaque source est connecté à un second accès, ce second accès étant relatif à ladite seconde polarisation ; et ledit réseau actif est composé de sources à bi-polarisation ayant deux accès correspondant respectivement à ces deux polarisations ; et chaque source dudit réseau actif est alimentée en énergie hyperfréquence par l'intermédiaire d'un commutateur électronique de polarisation, qui dirige alternativement l'énergie hyperfréquence vers le premier accès de ladite source relatif à ladite première polarisation, et vers son second accès relatif à l'autre polarisation ; de sorte que finalement l'énergie hyperfréquence qui alimente le réseau actif est alternativement dirigée, par l'intermédiaire du réflecteur auxiliaire, du réseau collecteur et de la connectique qui relie les sources dudit réseau collecteur à celles correspondantes des deux réseaux primaires, vers l'un et puis l'autre de ces deux réseaux primaires pour être finalement rayonnée vers la terre par l'un, puis l'autre de ces deux réflecteurs cylindro-parabolique. Selon une autre caractéristique, un tel système comprend en outre des déphaseurs réglables sur les voies de connectique entre le réseau collecteur et les réseaux primaires.

Selon une dernière réalisation particulière, chaque source de chaque réseau primaire est respectivement connectée, par une connectique courte, à une source géographiquement correspondante (homothétique) du réseau collecteur correspondant, le premier réseau collecteur étant apte à recevoir ou émettre des ondes hyperfréquence de la première polarisation, tandis que de la même façon, le second réseau collecteur est apte à recevoir ou à émettre des ondes hyperfréquence de la seconde polarisation ; et un premier réflecteur auxiliaire est illuminé par un premier réseau actif composé de sources aptes à émettre ou à recevoir des ondes hyperfréquence de la première polarisation ; et un second réflecteur auxiliaire est illuminé par un second réseau actif composé de sources aptes à émettre ou à recevoir des ondes hyperfréquence de la seconde polarisation ; et chaque source de chacun de ces deux réseaux actifs est alimentée en énergie hyperfréquence par l'intermédiaire d'un commutateur électronique de polarisation qui dirige alternativement cette énergie hyperfréquence vers le premier réseau actif et selon la première polarisation, et vers le second réseau actif et selon la seconde polarisation ; de sorte que finalement l'énergie hyperfréquence qui est appliquée à ce système est alternativement dirigée vers l'un puis l'autre des réflecteurs principaux pour être finalement rayonnée par ceux-ci vers la surface terrestre selon deux fauchées latérales distinctes et positionnées de part et d'autre du satellite.

Dans toutes ses réalisations et ses variantes, le système selon l'invention permet d'obtenir deux fauchées au sol à partir d'une chaîne d'amplification unique, faisant ainsi des économies de composants électroniques, et en conséquence, des économies de masse, d'encombrement, de consommation électrique et de dissipation thermique engendrées par l'élimination d'une chaîne d'amplification.

De toute façon, l'invention sera bien comprise, et ses avantages et caractéristiques ressortiront mieux, lors de la description suivante de quelques exemples non-limitatifs de réalisation, en référence aux dessins schématiques annexés dans lesquels :
- la figure 1 est une vue latérale très simplifiée d'un système selon l'invention ;
- la figure 2 est un schéma synoptique unifilaire du système de la figure 1 ;
- la figure 3 est un schéma synoptique bi-filaire d'un autre exemple d'un système selon l'invention ;
- la figure 4 est une vue en perspective montrant l'implantation des éléments du système selon la figure 3 sur le satellite ;
- la figure 5 est une vue en perspective montrant l'implantation des éléments du système selon la figure 2 sur le satellite.

Sur les différentes figures, les mêmes repères se réfèrent aux mêmes éléments. L'échelle du dessin n'est pas rigoureusement respectée pour des raisons de clarté. Tous les exemples qui seront discutés en détail utilisent une antenne d'émission pour illustrer les propos, cependant, il est bien connu de l'homme de l'art le théorème de réciprocité, selon lequel une antenne fonctionne de façon identique en émission ou en réception, à condition d'inverser le vecteur temporel.

Les descriptions et remarques qui sont faites concernant des antennes d'émission sont aussi strictement transposables, à condition d'inverser le flux de puissance dans l'appareil, à des antennes de réception. Dans le cas d'une antenne radar, le même dispositif physique sera généralement appelé à remplir les deux rôles d'émission et de réception ; cependant, il faut prévoir deux chaînes d'amplification, l'une pour fournir l'amplification de puissance nécessaire pour l'émission, et l'autre pour amplifier les signaux très faibles reçus après réflexion du signal émis par la cible radar. Le traitement des deux voies, de réception et d'émission, est parfaitement symétrique à l'exception de ce détail, et pour la clarté de la description qui suit, il suffit de décrire seule la voie émission, sachant que l'inversion en voie de réception peut en être déduite sans ambiguïté par l'homme de métier.

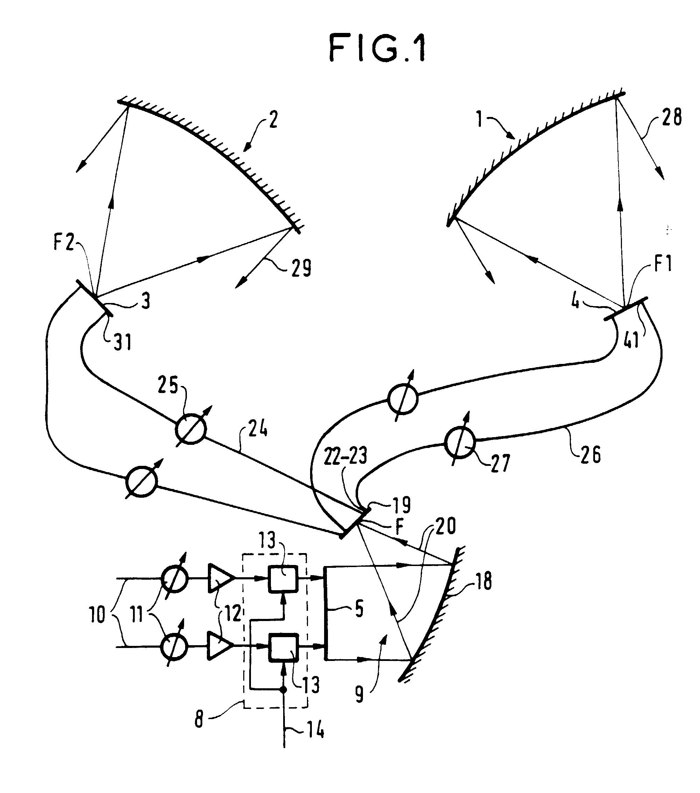

En se référant à l'ensemble des figures 1 à 5, il s'agit d'un système d'antenne d'imagerie radar hyperfréquence par satellite défilant en orbite basse, qui comporte deux réflecteurs cylindro-paraboliques principaux 1, 2, rayonnant vers la surface terrestre : un premier réflecteur principal 1 implanté d'un côté du satellite et rayonnant par exemple vers la droite, et un second réflecteur principal 2 implanté de l'autre côté du satellite et rayonnant vers la gauche. Ces deux réflecteurs 1, 2 sont illuminés par deux réseaux primaires 3, 4 respectifs qui sont pratiquement placés dans leur plan focal F1,F2 respectif. Les deux réseaux primaires 3,4 sont constitués de manière classique de sources de rayonnement telles que des cornets, ou encore des "patches" qui sont des éléments rayonnants planaires, réalisés en technologie microruban, par exemple.

L'énergie hyperfréquence 10 est, conformément à l'invention, acheminée alternativement vers les réseaux primaires 3,4, de la façon suivante :

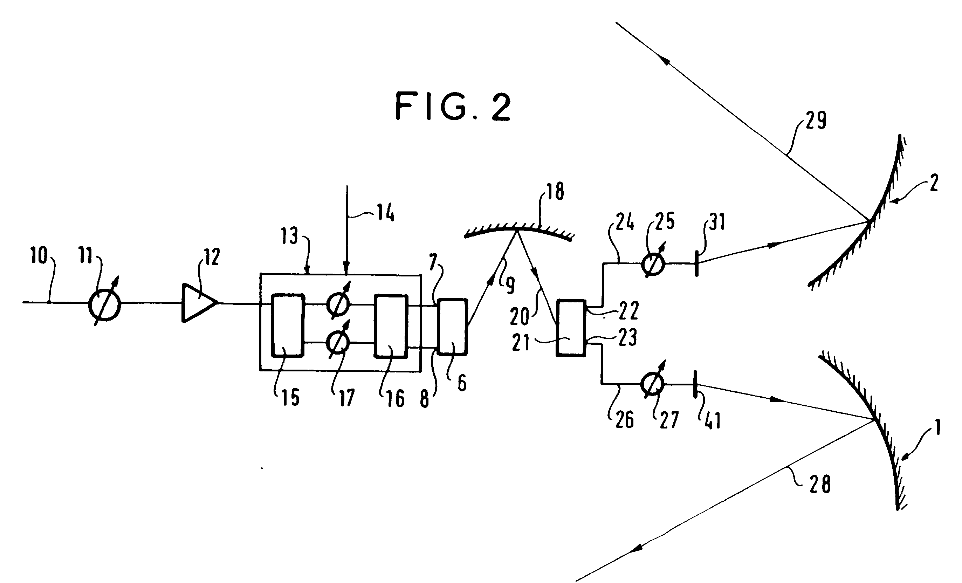

Le signal hyperfréquence 10 qui est appliqué à ce système d'antenne (ou reçu par celui-ci) passe classiquement par des déphaseurs réglables 11 et des amplificateurs 12 (qui sont soit des amplificateurs de puissance pour l'émission, soit des amplificateurs faible bruit pour la réception) pour être appliqué à un ensemble commutateur électronique rapide de polarisation 8 comportant une entrée commune de commande 14 et autant de commutateurs unitaires 13 qu'il y a de lignes 10 d'alimentation en énergie hyperfréquence. Le commutateur unitaire 13, illustré de manière classique sur la figure 2, comprend :
- une entrée de commande de commutation 14,
- un coupleur hybride d'entrée 15 recevant le signal de commutation 14, et
- un coupleur hybride de sortie 16 relié au coupleur 15 par des déphaseurs réglables 17, l'ensemble étant bien entendu totalement réversible et pouvant fonctionner aussi bien à l'émission qu'à la réception.

Selon les figures 1 et 2 qui représentent une réalisation préférentielle de l'invention, les sources 6 du réseau actif 5 sont des sources à bi-polarisation, chaque source 6 étant apte à recevoir, sur un premier accès 7, un premier signal hyperfréquence polarisé selon une première polarisation (par exemple selon une polarisation circulaire droite), et sur un second accès 8 un autre signal hyperfréquence polarisé selon une deuxième polarisation (par exemple selon une polarisation circulaire gauche). L'onde 9 qui est alors émise par cette source 6 est alors dans un cas une onde à polarisation circulaire droite et dans l'autre cas une onde à polarisation circulaire gauche, la source 6 étant bien entendu réversible et pouvant donc aussi bien émettre que recevoir avec les phénomènes inversés en conséquence.

Le faisceau 9 est rayonné alternativement selon une première polarisation puis une seconde polarisation par le réseau actif 5 de sources élémentaires 6, et le faisceau 9 est ensuite réfléchi par un réflecteur cylindro-parabolique auxiliaire 18, pour créer une tâche dans le plan focal F sur un réseau dit "collecteur" constitué de sources collectrices. En général, ce réflecteur auxiliaire 18 aura des dimensions plus petites que les réflecteurs principaux 1,2.

Ce réseau collecteur 19 reçoit donc les rayons 20 alternativement polarisés réfléchis par ce réflecteur auxiliaire, et il est composé, comme le réseau actif 5, de sources à bi-polarisation 21 (figure 2), qui peuvent être des cornets ou des patches, par exemple.

Il en résulte que chaque source 21 fournit alternativement un signal hyperfréquence d'une première polarisation sur son premier accès de sortie 22 (figure 2) et un signal hyperfréquence de l'autre polarisation sur son autre accès de sortie 23, ceci en réponse à l'onde 20 qu'il reçoit, tout ceci étant bien entendu toujours totalement réversible.

L'accès 22 est connecté, par une connectique 24 comprenant un déphaseur réglable 25, à une source 31 géographiquement correspondante du réseau primaire 3 qui illumine le réflecteur 2, tandis que l'accès 23 est de même façon connecté, par une connectique 26 comprenant un déphaseur réglable 27, à une source 41 géographiquement correspondante du réseau primaire 4 qui illumine le réflecteur 1.

Les faisceaux 28 et 29 qui sont finalement rayonnés vers la surface terrestre après réflexion sur les réflecteurs principaux 1 et 2 sont finalement deux faisceaux différents mais issus d'un même signal hyperfréquence 10 et utilisant un seul et même bloc électronique de puissance 12.

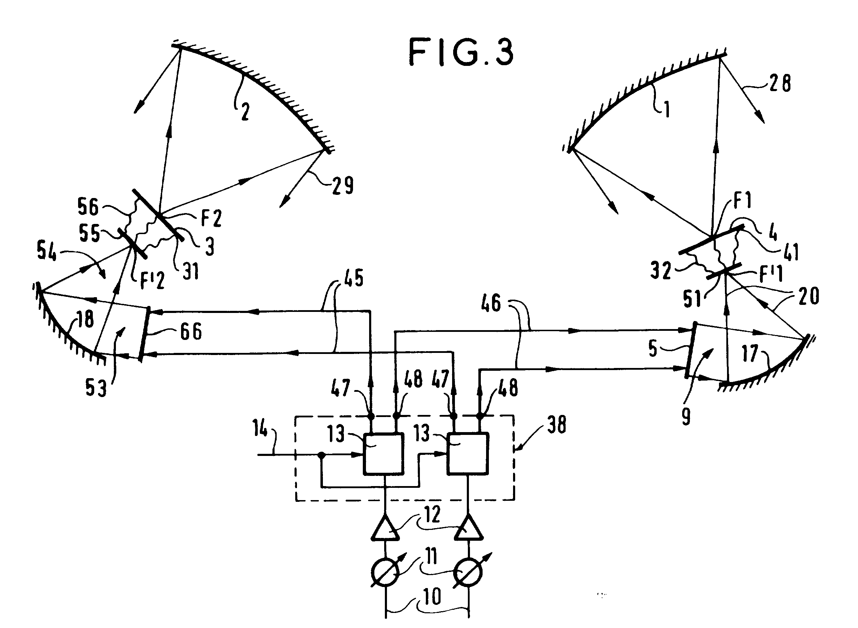

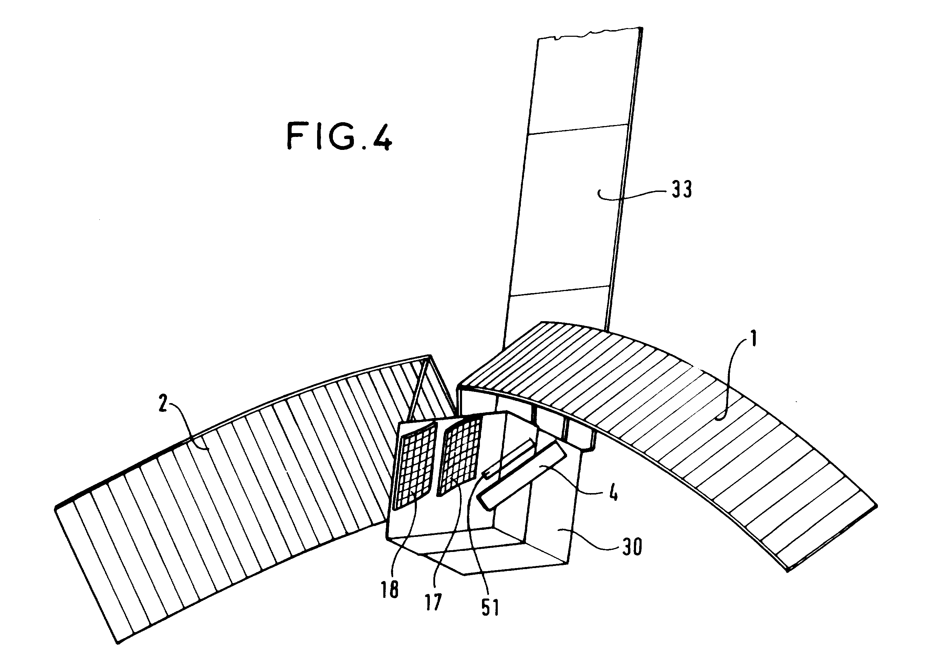

Les figures 3 et 4 concernent une autre réalisation selon l'invention d'un système d'imagerie radar à double zone de couverture. Le signal hyperfréquence 10 à transmettre est acheminé par un déphaseur réglable 11 et un amplificateur 12 vers le bloc de commutation 38 qui comprend des commutateurs rapides 13 actionnés par l'entrée commune de commande 14.

Sur les deux àccès respectifs de sortie 47,48 de chaque commutateur 13 sort alternativement en conséquence :
. sur les premiers fils 46 un signal hyperfréquence d'une première polarisation (par exemple circulaire droite),
. et sur des seconds fils 45 un signal hyperfréquence d'une seconde polarisation (par exemple circulaire gauche).

Le signal hyperfréquence 46 est appliqué aux sources d'un premier réseau actif 5, dont les sources sont aptes à émettre ou recevoir des ondes d'une première polarisation, tandis que le signal hyperfréquence 45 est appliqué aux sources d'un second réseau actif 66 dont les sources sont aptes à émettre ou recevoir des ondes d'une seconde polarisation.

Le réseau actif 5 illumine un premier réflecteur auxiliaire cylindro-parabolique 17, semblable au réflecteur 1 mais plus petit, tandis que de manière symétrique le réseau actif 66 illumine un second réflecteur auxiliaire cylindro-parabolique 18, identique au réflecteur 17.

Le faisceau 9 émis par le réseau actif 5 est réfléchi par le réflecteur 17 selon un faisceau 20, pour se concentrer dans le plan focal F'1 de ce réflecteur, sur un réseau 51 dit "collecteur". Ce réseau collecteur 51 est constitué de sources réceptrices (émettrices) aptes à recevoir (ou émettre) des ondes radioélectriques hyperfréquence de ladite première polarisation. Ces sources peuvent être des cornets ou des patches, par exemple.

Les sources du réseau collecteur 51 sont une à une connectées, par une connectique courte 32 qui comporte éventuellement des déphaseurs réglables non représentés, aux sources géographiquement correspondantes du réseau primaire 4. Cette disposition est décrite plus en détail dans le document FR-A-2 685 551, demande de brevet français au nom de la Demanderesse, qui enseigne une géométrie d'antenne à réflecteurs de type "Gregory" et son utilisation dans un domaine annexe à celui de la présente invention, à savoir celui des antennes de télécommunications.

Il est à noter que le réseau primaire 4, qui est disposé dans le plan focal F1 du réflecteur 1, est composé lui aussi de sources aptes à émettre ou recevoir des ondes hyperfréquence de cette même première polarisation.

De façon totalement symétrique, le faisceau 53 émis par le réseau actif 66 est réfléchi par le réflecteur 18 selon un faisceau 54 pour se concentrer dans le plan focal F'2 de ce réflecteur, sur un autre réseau collecteur 55 composé de sources aptes à émettre (ou recevoir) des ondes radioélectriques hyperfréquence de ladite deuxième polarisation.

Les sources du réseau collecteur 55 sont elles aussi connectées une à une, par une connectique courte 56 qui comporte éventuellement des déphaseurs réglables non représentés, aux sources géographiquement correspondantes du réseau primaire 3.

Ce réseau primaire 3 est disposé dans le plan focal F2 du réflecteur 2, et il est composé de sources aptes à émettre ou recevoir des ondes hyperfréquence de la seconde polarisation.

Dans l'exemple de cette figure, les connexions 32,56 sont très courtes, donc les deux réflecteurs 1,17 de la première polarisation sont pratiquement confocaux, tout comme les deux réflecteurs 2,18 de la deuxième polarisation. Ainsi, chacune de ces deux antennes est montée selon une géométrie "offset" de type "Gregory", plus connu sous la dénomination anglo-saxone : "offset fed Gregorian geometry", décrite plus en détail dans le document FR-A-2 685 551, mentionné ci-dessus.

Finalement, sous commande alternative du commutateur électronique rapide 38, ce système d'antenne rayonne vers la surface terrestre d'une part, une onde 28 d'une première polarisation qui est réfléchie par le réflecteur 1 positionné d'un côté du satellite, et d'autre part une onde 29 d'une seconde polarisation qui est réfléchie par le réflecteur 2 positionné de l'autre côté du satellite.

On obtient donc bien ainsi deux tracés au sol, ou fauchées, pour un seul passage du satellite en utilisant pour ces deux fauchées un seul et même ensemble d'amplificateurs de puissance.

Sur la figure 4, qui montre l'implantation réelle de ce système d'antenne sur le satellite, on reconnaît les réflecteurs principaux 1,2 placés de part et d'autre du satellite, les réflecteurs auxiliaires 17,18, le réseau collecteur 51, et le réseau primaire 4 d'illumination du réflecteur principal 1, ainsi que la plateforme 30 du satellite et son générateur solaire 33. Dans cette vue schématique en perspective, les éléments de collecteur 55 et réseau primaire 3 qui illumine le réflecteur principal 2 sont cachés par le réflecteur auxiliaire 18.

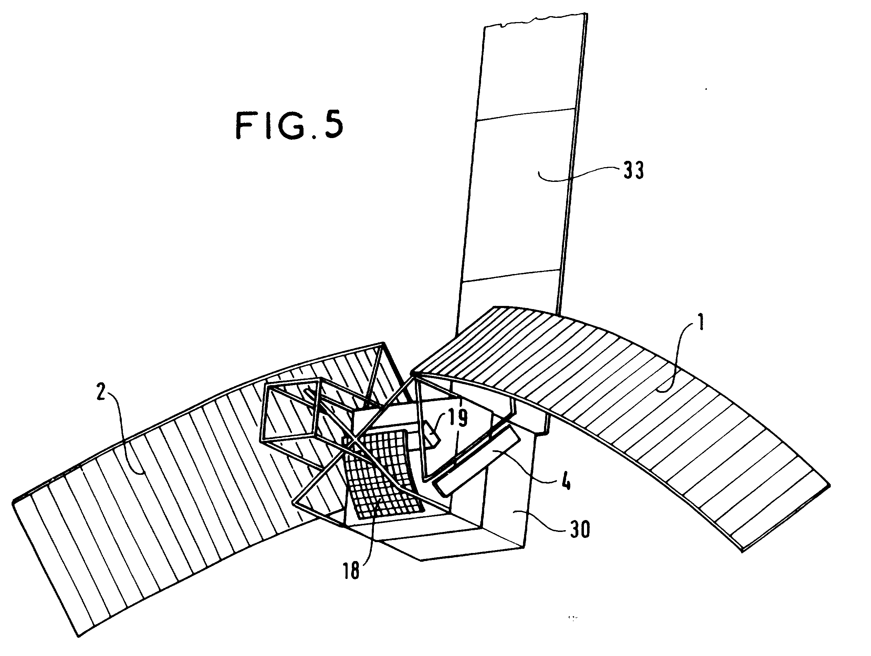

Sur la figure 5, qui montre l'implantation réelle du système d'antenne des figures 1 et 2 sur le satellite, on reconnaît les réflecteurs principaux 1,2 placés de part et d'autre du satellite, le réflecteur auxiliaire 18, le collecteur commun 19, le réseau primaire 4 d'illumination du réflecteur 1, ainsi que la plateforme 30 du satellite et son générateur solaire 33.

## Revendications

1. Système d'imagerie radar hyperfréquence embarquée sur satellite et à double zone de couverture, comprenant deux réflecteurs principaux (1,2) cylindro-parabolique illuminés respectivement par deux réseaux primaires (3,4) de sources aptes à émettre ou à recevoir des ondes hyperfréquence, lesdits réseaux primaires (3,4) étant disposés sensiblement dans le plan focal respectif (F1,F2) desdits réflecteurs principaux (1,2), caractérisé en ce que lesdits réseaux primaires (3,4) sont alimentés à partir d'une chaîne d'amplification unique.

2. Système selon la revendication 1, caractérisé en ce que lesdits réseaux primaires (3,4) sont alimentés en alternance à partir d'une chaîne d'amplification unique.

3. Système selon l'une quelconque des revendications 1 à 2, caractérisé en ce qu'il comprend en outre au moins un réseau collecteur (19;51,55) et en ce que lesdits réseaux primaires (3,4) sont alimentés à partir de ce(s) réseau(x) collecteur (19;51,55) via des voies d'une connectique homothétique (24,26;32,56 resp.) qui conserve les relations géométriques entre les signaux reçus par les sources d'un réseau collecteur et les signaux transmis vers les sources d'un réseau primaire correspondant.

4. Système selon la revendication 3, comprenant en outre un réseau actif (5) et un réflecteur auxiliaire (18), et un seul réseau collecteur (19) disposé dans le plan focal F dudit réflecteur auxiliaire (18) qui est illuminé par ledit réseau actif (5).

5. Système selon la revendication 3, comprenant en outre deux réseaux actifs (5,66), deux réflecteurs auxiliaires (17,18), et deux réseaux collecteurs (51,55) disposés chacun dans le plan focal (F'1, F'2) respectif de l'un desdits réflecteurs auxiliaires (17,18) qui est illuminé respectivement par l'un desdits réseaux actifs (5,66).

6. Système selon l'une quelconque des revendications précédentes, caractérisé en ce que lesdits réseaux primaires (3,4) sont excités par des polarisations orthogonales entre elles.

7. Système selon la revendication 6, caractérisé en ce que le réseau primaire (3) du premier réflecteur principal (1) est composé de sources aptes à émettre ou à recevoir des ondes hyperfréquence d'une première polarisation, et en ce que le réseau primaire (4) du second réflecteur principal (2) est composé de sources aptes à émettre ou à recevoir des ondes hyperfréquence d'une seconde polarisation, lesdites première et seconde polarisations étant orthogonales entre elles.

8. Système selon la revendication 4 et l'une quelconque des revendications 7 ou 6, caractérisé :
. en ce que chaque source (41) du réseau primaire (4) relatif au premier réflecteur principal (1) est connecté à un premier accès (23) d'une source géographiquement correspondante (21) dudit réseau collecteur (19), ce réseau collecteur étant composé de sources (21) à bi-polarisation, et ce premier accès (23) étant relatif à ladite première polarisation ;
. en ce que de la même façon, chaque source (31) du réseau primaire (3) relatif au deuxième réflecteur principal (2) et correspondant géographiquement à chaque source (41) est connecté à un second accès (22), ce second accès (22) étant relatif à ladite seconde polarisation ;
. en ce que ledit réseau actif (5) est composé de sources (6) à bi-polarisation ayant deux accès (7,8) correspondant respectivement à ces deux polarisations ; et
. en ce que chaque source (6) dudit réseau actif (5) est alimentée en énergie hyperfréquence par l'intermédiaire d'un commutateur électronique de polarisation (13), qui dirige alternativement l'énergie hyperfréquence (10) vers le premier accès (8) de ladite source (6) relatif à ladite première polarisation, et vers son second accès (7) relatif à l'autre polarisation ;
de sorte que finalement l'énergie hyperfréquence (10) qui alimente le réseau actif (5) est alternativement dirigée, par l'intermédiaire dudit réflecteur auxiliaire, dudit réseau collecteur (19) et de ladite connectique (24,26) qui relie les sources dudit réseau collecteur (19) celles correspondantes des deux réseaux primaires (3,4), vers l'un et puis l'autre de ces deux réseaux primaires (3,4) pour être finalement rayonnée vers la terre par l'un (2), puis l'autre (1) de ces deux réflecteurs cylindro-parabolique.

9. Système selon la revendication 8, caractérisé en ce qu'il comprend en outre des déphaseurs réglables (25,27) sur lesdites voies de connectique (24,26) entre ledit réseau collecteur (19) et lesdits réseaux primaires (3,4).

10. Système selon les revendications 5 et 7, caractérisé :
. en ce que chaque source (31,41) de chaque réseau primaire (3,4) est respectivement connectée, par une connectique courte (32,56) à une source géographiquement correspondante (homothétique) dudit réseau collecteur (51,55) correspondant, le premier réseau collecteur (51) étant apte à recevoir ou émettre des ondes hyperfréquence de ladite première polarisation, tandis que de la même façon, le second réseau collecteur (55) est apte à recevoir ou à émettre des ondes hyperfréquence de ladite seconde polarisation ;
. en ce qu'un premier réflecteur auxiliaire (17) est illuminé par un premier réseau actif (5) composé de sources aptes à émettre ou à recevoir des ondes hyperfréquence de ladite première polarisation ;
. en ce qu'un second réflecteur auxiliaire (18) est illuminé par un second réseau actif (66) composé de sources aptes à émettre ou à recevoir des ondes hyperfréquence de ladite seconde polarisation ; et
. en ce que chaque source de chacun de ces deux réseaux actifs (5,66) est alimentée en énergie hyperfréquence (10) par l'intermédiaire d'un commutateur électronique de polarisation (38) qui dirige alternativement cette énergie hyperfréquence (10) vers ledit premier réseau actif (5) et selon ladite première polarisation, et vers ledit second réseau actif (66) et selon ladite seconde polarisation ;
de sorte que finalement l'énergie hyperfréquence (10) qui est appliquée à ce système est alternativement dirigée vers l'un (1) puis l'autre (2) desdits réflecteurs principaux pour être finalement rayonnée par ceux-ci vers la surface terrestre selon deux fauchées latérales distinctes et positionnées de part et d'autre du satellite.

## Patentansprüche

1. Mikrowellen-Abbildungsradarsystem, das in einem Satelliten untergebracht ist und mit doppeltem Erfassungsbereich, das zwei zylindrisch-parabolischen Hauptreflektoren (1, 2) umfaßt, die jeweils von zwei primären Netzen (3, 4) von Quellen angestrahlt zu werden, die fähig sind, Mikrowellen auszusenden und zu empfangen, wobei die primären Netze (3, 4) im wesentlichen in der jeweiligen Fokalebene (F1, F2) der Hauptreflektoren (1, 2) angeordnet sind, **dadurch gekennzeichnet**, daß die primären Netze (3, 4) von einer einzigen Verstärkerkette aus betrieben werden.

2. System nach Anspruch 1, dadurch gekennzeichnet, daß die primären Netze (3, 4) von der einzigen Verstärkerkette aus abwechselnd betrieben werden.

3. System nach einem der Ansprüche 1 bis 2, dadurch gekennzeichnet, daß es außerdem wenigstens ein Kollektornetz (19; 51, 55) umfaßt und daß die primaren Netze (3, 4) von diesem (diesen) Kollektornetz(en) (19; 51, 55) aus über Wege einer homothetischen Verbindungstechnik (24, 26 bzw. 32, 56) betrieben werden, die die geometrischen Beziehungen zwischen den von den Quellen eines Kollektornetzes empfangenen Signalen und den zu den Quellen eines entsprechenden primären Netzes übertragenen Signalen erhält.

4. System nach Anspruch 3, das außerdem ein aktives Netz (5) und einen Hilfsreflektor (18) und ein einziges Kollektornetz (19) umfaßt, das in der Fokalebene F des Hilfsreflektors (16) angeordnet ist, der vom aktiven Netz (5) angestrahlt wird.

5. System nach Anspruch 3, das außerdem zwei aktive Netze (5, 66), zwei Hilfsreflektoren (17, 18) und zwei Kollektornetze (51, 55) umfaßt, die jeweils in der jeweiligen Fokalebene (F'1, F'2) eines der beiden Hilfsreflektoren (17, 18) angeordnet sind, der entsprechend von einem der aktiven Netze (5, 66) angestrahlt wird.

6. System nach einem der vorhergehenden Ansprüche, - dadurch gekennzeichnet, daß die primären Netze (3, 4) von zueinander orthogonalen Polarisationen angeregt werden.

7. System nach Anspruch 6, dadurch gekennzeichnet, daß das primäre Netz (3) des ersten Hauptreflektors (1) aus Quellen besteht, die fähig sind, Mikrowellen mit einer ersten Polarisation auszusenden oder zu empfangen, und daß das primäre Netz (4) des zweiten Hauptreflektors (2) aus Quellen besteht, die fähig sind, Mikrowellen mit einer zweiten Polarisation auszusenden und zu empfangen, wobei die ersten und zweiten Polarisationen zueinander orthogonal sind.

8. System nach Anspruch 4 und einem der Ansprüche 7 oder 6, dadurch gekennzeichnet,
- daß jede Quelle (41) des den ersten Hauptreflektor (1) betreffenden, primären Netzes (4) mit einem ersten Zugang (23) einer geographisch entsprechenden Quelle (21) des Kollektornetzes (19) verbunden ist, wobei dieses Kollektornetz aus Quellen (21) mit Bipolarisation besteht und dieser erste Zugang (23) die erste Polarisation betrifft,
- daß in der gleichen Weise jede Quelle (31) des den zweiten Hauptreflektor (2) betreffenden und jeder Quelle (41) geographisch entsprechenden, primären Netzes (3) mit einem zweiten Zugang (22) verbunden ist, wobei dieser zweite Zugang (22) die zweite Polarisation betrifft,
- daß das aktive Netz (5) aus Quellen (6) mit Bipolarisation mit zwei Zugängen (7, 8), die jeweils diesen beiden Polarisationen entsprechen, und
- daß jede Quelle (6) des aktiven Netzes (5) mittels eines elektronischen Polarisationswechselschalters (13) mit Mikrowellenenergie betrieben wird, der die Mikrowellenenergie (10) abwechselnd auf den die erste Polarisation betreffenden, ersten Zugang (8) der Quelle (6) und auf ihren die zweite Polarisation betreffenden, zweiten Zugang (7) gerichtet wird,
so daß schließlich die Mikrowellenenergie (10), die das aktive Netz (5) betreibt, mittels des Hilfsreflektors, des Kollektornetzes (19) und der Verbindungstechnik (24, 26), die die Quellen des Kollektornetzes (19) mit den entsprechenden der beiden primären Netze (3, 4) verbindet, abwechselnd auf das eine und dann das andere dieser beiden primären Netze (3, 4) gerichtet wird, um schließlich von dem einen (2) dann dem anderen (1) dieser beiden zylindrisch-parabolischen Reflektoren zur Erde abgestrahlt zu werden.

9. System nach Anspruch 8, dadurch gekennzeichnet, daß es außerdem in den Wegen der Verbindungstechnik (24, 26) zwischen dem Kollektornetz (19) und den primären Netzen (3, 4) einstellbare Phasenschieber (25, 27) umfaßt.

10. System nach den Ansprüchen 5 und 7, dadurch gekennzeichnet,
- daß jede Quelle (31, 41) jedes primären Netzes (3, 4) jeweils durch kurze Verbindungen (32, 56) mit einer geographisch entsprechenden (homothetischen) Quelle des entsprechenden Kollektornetzes (51, 55) verbunden ist, wobei das erste Kollektornetz (51) fähig ist, Mikrowellen mit der ersten Polarisation zu empfangen oder auszusenden, während in der gleichen Weise das zweite Kollektornetz (55) fähig ist, Mikrowellen mit der zweiten Polarisation zu empfangen oder auszusenden,
- daß ein erster Hilfsreflektor (17) von einem ersten aktiven Netz (5) angestrahlt wird, das aus Quellen besteht, die fähig sind, Mikrowellen mit der ersten Polarisation auszusenden oder zu empfangen,
- daß ein zweiter Hilfsreflektor (18) von einem zweiten aktiven Netz (66) angestrahlt wird, das aus Quellen besteht, die fähig sind, Mikrowellen mit der zweiten Polarisation auszusenden oder zu empfangen, und
- daß jede Quelle jedes dieser beiden aktiven Netze (5, 66) mittels eines elektronischen Polarisationswechselschalters (38) mit Mikrowellenenergie (10) betrieben wird, der diese Mikrowellenenergie (10) abwechselnd auf das erste aktive Netz (5) und gemäß der ersten Polarisation und auf das zweite aktive Netz (66) und gemäß der zweiten Polarisation richtet,
so daß schließlich die Mikrowellenenergie (10), die diesem System aufgegeben wird, abwechselnd auf den einen (1), dann den anderen (2) der Hauptreflektoren gerichtet wird, um schließlich von diesen zur Erdoberfläche gemäß zwei seitlichen Bereichen abgestrahlt zu werden, die verschieden sind und sich beiderseits des Satelliten befinden.

## Claims

1. A satellite-borne microwave radar imaging system having two coverage regions and comprising two cylindro-parabolic main reflectors (1. 2) respectively illuminated by two primary arrays (3, 4) of sources capable of transmitting or receiving microwaves. said primary arrays (3. 4) being disposed substantially in the respective focal planes (F1, F2) of said main reflectors (1, 2), said imaging system being characterized in that said primary arrays (3, 4) are fed from a single amplification means.

2. A system according to claim 1, characterized in that said primary arrays (3, 4) are fed alternately from a single amplification means.

3. A system according to claim 1 or 2, characterized in that it further includes at least one collector array (19; 51, 55), and in that said primary arrays (3. 4) are fed from the collector array(s) (19; 51. 55) via respective configuration-conserving connection paths (24, 26; 32, 56) which retain the geometrical relationships between the signals received by the sources in a collector array, and the signals transmitted to the sources in a corresponding primary array.

4. A system according to claim 3, further including an active array (5) and an auxiliary reflector (18), and a single collector array (19) disposed in the focal plane F of said auxiliary reflector (18) which is illuminated by said active array (5).

5. A system according to claim 3, further including two active arrays (5, 66), two auxiliary reflectors (17, 18), and two collector arrays (51, 55), each of which is disposed in the focal plane (F'1, F'2) of a respective one of said auxiliary reflectors (17, 18) which is illuminated by a respective one of said active arrays (5, 66).

6. A system according to any preceding claim, characterized in that said primary arrays (3. 4) are excited by mutually orthogonal polarizations.

7. A system according to claim 6, characterized in that the primary array (3) of the first main reflector (1) is composed of sources that are capable of transmitting or receiving microwaves having a first polarization, and in that the primary array (4) of the second main reflector (2) is composed of sources that are capable of transmitting or receiving microwaves having a second polarization, said first polarization and said second polarization being mutually orthogonal.

8. A system according to claim 4 and claim 7 or 6, said system being characterized in that:
each source (41) in the primary array (4) that relates to the first main reflector (1) is connected to a first access (23) of a geographically corresponding source (21) in said collector array (19), the collector array being composed of sources (21) each having two polarizations, and the first access (23) relating to said first polarization;
in the same way, each source (31) in the primary array (3) that relates to the second main reflector (2), and that corresponds geographically to each corresponding source (41) in the array that relates to the first main reflector, is connected to a second access (22), the second access (22) relating to said second polarization;
said active array (5) is composed of sources (6) each having two polarizations, and each of which has two accesses (7. 8) respectively corresponding to the two polarizations; and
each source (6) in said active array (5) is fed with microwave energy via an electronic polarization switch (13) which alternately directs the microwave energy (10) towards the first access (8) of said source (6), which first access relates to said first polarization, and towards the second access (7) of said source, which second access relates to the other polarization:
so that the microwave energy (10) which feeds the active array (5) is alternately directed towards one and then the other of the two primary arrays (3, 4) via said auxiliary reflector of said collector array (19), and via said connection paths (24. 26) which connect the sources in said collector array (19) to the corresponding sources in the two primary arrays (3, 4), said microwave energy finally being radiated towards the Earth by one of the two cylindro-parabolic reflectors (2) and then the other one of them (1).

9. A system according to claim 8, characterized in that it further includes adjustable phase-shifters (25. 27) on said connection paths (24, 26) between said collector array (19) and said primary arrays (3, 4).

10. A system according to claims 5 and 7, characterized in that:
each source (31. 41) of each primary array (3, 4) is connected via a respective short connection path (32, 56) to a geographically corresponding (configuration-conserving) source in said corresponding collector array (51, 55), the first collector array (51) being capable of receiving or transmitting microwaves having said first polarization, while, in the same way, the second collector array (55) is capable of receiving or transmitting microwaves having said second polarization;
a first auxiliary reflector (17) is illuminated by a first active array (5) composed of sources capable of transmitting or receiving microwaves having said first polarization;
a second auxiliary reflector (18) is illuminated by a second active array (66) composed of sources capable of transmitting or receiving microwaves having said second polarization; and
each source of each of the two active arrays (5. 66) is fed with microwave energy (10) via an electronic polarization switch (38) which alternately directs said microwave energy (10) towards said first active array (5) and with said first polarization, and towards said second active array (66) and with said second polarization;
so that the microwave energy (10) which is applied to the system is alternately directed towards one of said main reflectors (1) and then the other of said main reflectors (2), so as to be finally radiated by the two main reflectors towards the surface of the Earth in two distinct side swaths that are positioned one on either side of the satellite.
